# EUROPÄISCHE PATENTSCHRIFT

(11) **EP 3 453 556 B1**
(45) Veröffentlichungstag und Bekanntmachung des Hinweises auf die Patenterteilung: **29.04.2020**
(21) Anmeldenummer: 17465547.2
(22) Anmeldetag: 11.09.2017
(51) Int. Cl.: B60K 20/02, B60K 35/00, B60R 11/02, B60R 16/037, F16H 21/14, B60N 2/75

(54) **VORRICHTUNG AUFWEISEND EINEN GRUNDTRÄGER UND EINEN GERÄTETRÄGER**
DEVICE COMPRISING A BASE CARRIER AND A DEVICE CARRIER
DISPOSITIF COMPORTANT UN SUPPORT DE BASE ET UN PORTE-OUTIL

(43) Veröffentlichungstag der Anmeldung: 13.03.2019
(73) Patentinhaber: Continental Automotive GmbH, 30165 Hannover (DE)
(72) Erfinder: Zanzinger, Werner, 300408 Timisoara (RO)

(56) Entgegenhaltungen:
- EP-A1- 0 018 662
- DE-A1-102015 012 890
- DE-A1-102015 015 878

## Beschreibung

Die Erfindung betrifft eine Vorrichtung aufweisend einen Grundträger und einen Geräteträger. Aus dem Stand der Technik sind derartige Geräteträger bekannt, deren Höhe zwischen einer ersten Position und einer zweiten Position relativ zu dem Grundträger verstellbar sind. Diese Grundträger sind beispielsweise im Innenraum eines Kraftfahrzeuges angeordnet und fest mit der Karosserie des Kraftfahrzeuges verbunden. Auf dem Geräteträger sind Geräte wie beispielsweise Bedienelemente in der Form von Joysticks oder Tastaturen oder Anzeigeelemente in der Form von beispielsweise Bildschirmen oder Touchscreens befestigt. Um die Lage dieser Geräte an die verschiedenen Benutzer eines Kraftfahrzeuges oder je nach Bediensituation anpassen zu können, sind die Grundträger und damit die Geräte in ihrer Höhe relativ zur Karosserie von einer ersten Position zu einer zweiten Position verstellbar. (Aus Sicherheitsgründen ist oft vorgesehen, die Verstellbarkeit nur während des Stillstandes des Kraftfahrzeuges zu ermöglichen, um den Kraftfahrer während der Fahrt nicht unnötig abzulenken.) In einer ersten Position liegt der Geräteträger direkt auf dem Grundträger oder mit dem auf mit dem Grundträger starr verbundenen Bauteilen auf. Um den Geräteträger in eine zweite Position zu bringen wird über eine Mechanik der Geräteträger gegenüber dem Grundträger angehoben, also relativ zum Grundträger verstellt. Im Fahrbetrieb des Kraftfahrzeuges können durch die unterschiedlichen auftretenden Beschleunigungen und Krafteinwirkungen seitens des Kraftfahrers große Kräfte auf die Mechanik ausgeübt werden, insbesondere dann, wenn der Kraftfahrer während der Fahrt seine Hand oder sogar seinen gesamten Arm auf dem Bedienelement auflegt, so dass dies insbesondere bei einem vorhandenen Antriebselement zu einer aufwendigen Dimensionierung der Mechanik und des Antriebselements führen kann. Die DE 102015012890 A1 beschreibt eine eine Verstellvorrichtung für ein Kraftfahrzeug mit einem Winkelelement, welches einen ersten Schenkel und einen zweiten Schenkel aufweist, die einen Winkel (α) einschließen; mit einer einen Endanschlag aufweisenden Linearführung einem mittels eines Schubgelenks an der Linearführung in Hochrichtung der Verstellvorrichtung translatorisch beweglich geführten Trägerelement, an welchem der erste Schenkel des Winkelelements mittels eines ersten Drehgelenks um eine in Querrichtung der Verstellvorrichtung verlaufende erste Drehachse verschwenkbar gelagert ist; einem Federelement, welches das Trägerelement mit dem ersten Schenkel des Winkelelements verbindet; einem Koppelgetriebe, an welchem der erste Schenkel des Winkelelements mittels eines zweiten Drehgelenks um eine in Querrichtung (y) der Verstellvorrichtung verlaufende zweite Drehachse verschwenkbar gelagert ist; einem an dem Koppelgetriebe angreifenden Drehantrieb, mittels welchem unter Vermittlung des Koppelgetriebes das Winkelelement translatorisch bewegbar sowie um die erste Drehachse verschwenkbar ist. Die EP 0018662 A1 beschreibt eine Armlehnenanordnung für mindestens eine Seite eines Fahrzeugsitzes, die in viele Positionen einstellbar ist, mit einem Sitzrahmen und einer Armlehne, gekennzeichnet durch eine Armlehnenbefestigungsverbindung, welche durch den Sitzrahmen zur Bewegung der Armlehne und zum Sperren derselben gehaltert ist, und zwar gegen eine Abwärtsbewegung bezüglich des Sitzrahmens in eine Mehrzahl von Stellungen, mit mindestens: einer ersten die Sitzbreite ausdehnenden Position, wo ihre obere Oberfläche in gleicher Ebene wie die Sitzoberfläche und unmittelbar neben dieser angeordnet ist, wobei die Sitzkissenoberfläche auf dem Sitzrahmen angebracht ist; eine zweite Armlehnenposition, bei der die Armlehne über der ersten Position und im allgemeinen parallel zu dieser angeordnet ist; eine dritte Hüfthalterungsposition, bei der ihr rückwärtiges Ende über das Niveau der Sitzkissen und über ihr vorderes Ende angehoben ist; und eine vierte Lager- bzw. Ruheposition, wo die Armlehne im allgemeinen vertikal neben der am Sitzrahmen befestigten Rückenlehne angeordnet ist. Die gattungsgemässe DE 102015015878 beschreibt einen höhenverstellbaren KFZ-Sitz mit einem Rahmen, mit einen Mechanismus zur Höhenverstellung des Sitzes mit einem vorderen Hebel und einem hinteren Hebel und der vordere und hintere Hebel je an einem oberen Gelenk an dem Rahmen und je an einem unteren Gelenk an einer Haltestruktur gelenkig befestigt sind, so dass ein Verschwenken des vorderen und hinteren Hebels eine Höhenverstellung des Sitzes bewirkt, einen Aktuator zur motorischen Höhenverstellung des Sitzes, wobei das Kraftfahrzeug einen Zusatzmechanismus in Ergänzung zu dem vorderen und hinteren Hebel umfasst und eine Kraft, insbesondere ein Drehmoment, für die Höhenverstellung des Sitzes von dem Aktuator auf den Zusatzmechanismus aufbringbar ist.

Aufgabe der Erfindung ist es, eine Vorrichtung anzugeben, die insbesondere bei vorhandenem Antriebselement ein Antriebelement mit möglichst wenig Leistung und eine preiswert ausgeführte Mechanik anzugeben.

Diese Aufgabe wird durch eine Vorrichtung mit den Merkmalen des Patentanspruchs 1 erreicht. Vorteilhafte Ausgestaltungen der Erfindung sind den abhängigen Ansprüchen zu entnehmen. Durch die Ausgestaltung des Antriebs mittels einem ersten Kurbelhebel und einem Pleuel und die Führung für den Geräteträger wird eine Bewegung des Geräteträgers erreicht, die dem Bewegungsablauf eines Hubkolbenverbrennungsmotors ähnelt, wobei der Geräteträger dem kreisförmigen Teil des Hubkolbens, der erste Kurbelhebel der Kurbelwelle, der Pleuel dem Pleuel und die Führung dem Zylinder und dem zylinderförmigen Teil des Hubkolbens des Hubkolbenmotors entspricht. Der erfindungsgemäße Antrieb erfolgt von dem ersten Kurbelhebel auf den Pleuel und von dort auf den Geräteträger und nicht wie umgekehrt beim Hubkolbenmotor. Die Führung kann durch einen oder mehrere Führungsschlitten realisiert sein, die jeweils von einer Führungsschiene geführt werden. Hierbei sind die Führungsschienen entweder mit dem Grundträger oder dem Geräteträger starr verbunden, während die Führungsschlitten dann entsprechend mit dem jeweils anderen Bauteil (Geräteträger bzw. Grundträger) starr verbunden sind.

Die Lagerung des ersten Kurbelhebels zur Drehung des ersten Kurbelhebels um die erste Drehachse kann über eine erste Welle, die um die erste Drehachse drehbar durch ein erstes Lager gelagert ist, erfolgen, wobei das erste Lager starr mit dem Grundträger verbunden ist. Die Lagerung des ersten Kurbelhebels zur Drehung des ersten Kurbelhebels um die erste Drehachse kann auch durch ein erstes Lager erfolgen, welches zwischen dem Kurbelhebel und einem Dorn angeordnet. Hierbei kann der Dorn direkt an dem Grundträger angeordnet oder ausgebildet sein und so auf eine erste Welle verzichtet werden.

Dadurch, dass ein Anschlagselement mit dem ersten Kurbelhebel starr oder über ein zweites Getriebe verbunden ist und der Anschlag für das Anschlagselement so positioniert ist, dass der Geräteträger seinen oberen Totpunkt erreichen und überwinden kann und dann beim Weiterdrehen in die gleiche Richtung das Anschlagselement in Anlage zum Anschlag gelangt wird verhindert, dass eine Kraft, die auf den Geräteträger von oben einwirkt, auf ein vorhandenes Antriebselement einwirken kann, da die Kraft über das Anschlagselement und den Anschlag in den Grundträger eingeleitet wird und das Antriebselement mit dieser Kraft nicht beaufschlagt wird.

Wenn das Anschlagselement starr mit dem ersten Kurbelhebel verbunden oder in dem ersten Kurbelhebel ausgestaltet ist, wird der erste Kurbelhebel an einem Weiterdrehen gehindert, der erste Kurbelhebel, ein Lager des Kurbelhebels, der Pleuel und die Führung müssen aber die auftretenden Kräfte ohne Beschädigung des ersten Kurbelhebels, des Lagers des ersten Kurbelhebels, des Pleuels und der Führung weiterleiten können.

Wenn das Anschlagselement starr mit dem Pleuel verbunden oder als Teil des Pleuels ausgestaltet ist, werden der erste Kurbelhebel und das Lager des Kurbelhebels entlastet und können entsprechend ausgestaltet werden, dass sie nur die Kräfte aufnehmen müssen, die bei der Verstellung des Geräteträgers von der ersten zur zweiten Position bzw. umgekehrt auftreten.

Wenn das Anschlagselement mit dem Pleuel oder dem ersten Kurbelhebel über ein zweites Getriebe verbunden ist, kann die Position des Anschlagselementes so gewählt werden, dass das Anschlagselement nach dem Überwinden des oberen Totpunktes des Geräteträgers an dem Anschlag zur Anlage kommt und so die auf den Geräteträger in der zweiten Position einwirkende Kraft vom Geräteträger über das Anschlagselement und den Anschlag in den Grundträger eingeleitet werden. So müssen der erste Kurbelhebel und der Pleuel nur so dimensioniert werden, dass sie die Kräfte aufnehmen können, die beim Verstellen von der ersten zur zweiten Position bzw. umgekehrt auftreten. Das zweite Getriebe kann beispielsweise als Zahnradgetriebe oder als Koppelgetriebe ausgestaltet sein. Bei der Ausgestaltung als Koppelgetriebe kann das Anschlagselement starr mit einer Getriebestange verbunden sein, die gelenkig mit dem Pleuel und/oder dem ersten Kurbelhebel verbunden ist. Die Getriebestange kann eine lineare Ausdehnung aufweisen, kann aber je nach Einbausituation auch gebogen und/oder gekröpft sein. Die letztgenannte Ausgestaltung kann beispielsweise in der ersten Position vorteilhaft sein, wenn bei einer linearen Ausgestaltung der Getriebestange die Position eines Antriebsmotors verändert werden müsste.
Wenn das Koppelgetriebe einen zweiten Kurbelhebel aufweist und der zweite Kurbelhebel um eine zweite Achse drehbar mittels eines zweiten Lagers gelagert ist, das Anschlagselement im Abstand zur zweiten Achse an dem zweiten Kurbelhebel angeordnet ist und die Getriebestange im Abstand zur zweiten Achse gelenkig mit dem zweiten Kurbelhebel verbunden ist, wird vor Erreichen der zweiten Position nach Überwinden des oberen Totpunktes das Anschlagselement in Richtung des Anschlags eingeschwenkt und schließlich zur Anlage an den Anschlag gebracht. Die auf den Geräteträger einwirkende Kraft wird beim Anliegen des Anschlagselementes an dem Anschlag über das zweite Lager und den zweiten Kurbelhebel in den Anschlag eingeleitet.

Eine Möglichkeit bei diesem Aufbau ist es wenn mittels des zweiten Lagers eine zweite Welle gelagert und der zweite Kurbelhebel mittels dieser Welle um die zweite Drehachse verschwenkbar ist und das zweite Lager starr mit dem Geräteträger verbunden ist. Dann wird eine auf den Geräteträger auftretende Last über das zweite Lager, die zweite Welle und den zweiten Kurbelhebel an den Anschlag geführt, so dass auch die Getriebestange nicht mit dieser Last beaufschlagt wird. Es ist auch möglich, den zweiten Kurbelhebel direkt über das zweite Lager drehbar auszugestalten und so auf die zweite Welle zu verzichten. Das zweite Lager kann beispielsweise einen Dorn umgeben, der starr mit dem Geräteträger verbunden ist.

Wenn zusätzlich der zweite Kurbelhebel eine zweite Auflagefläche aufweist oder mit einer zweiten Auflagefläche starr verbunden ist und der Geräteträger in der zweiten Position auf dieser Auflagefläche aufliegt wird die auf den Geräteträger einwirkende Kraft von dem Geräteträger in die Auflage, von dort über den zweiten Kurbelhebel und das Anschlagselement in den Anschlag eingeleitet, so dass die übrigen zuvor genannten beweglichen Bauteile mit Ausnahme der Führung und des zweiten Lagers nicht für diese zusätzlich auftretenden Kräfte ausgelegt sein müssen.

Wenn zwei zweite Kurbelhebel vorhanden sind, die eine gemeinsame Drehachse aufweisen, kann die auftretende Kraft besser verteilt werden. So können die bei der Führung auftretenden Kippkräfte reduziert werden. Wenn die zwei zweiten Kurbelhebel auf einer zweiten Welle angeordnet und mittels der zweiten Welle starr miteinander verbunden sind können sie gemeinsam verstellt werden.

Wenn die zwei zweiten Kurbelhebel über ein Verbindungselement starr miteinander verbunden sind wird zum einen die Stabilität erhöht und es wird für die Drehung der beiden Kurbelhebel nur eine gelenkige Verbindung benötigt, auch wenn die beiden Kurbelhebel nicht zusammen auf einer zweiten Welle angeordnet sind. Weiterhin kann das Verbindungselement als zweite Auflagefläche ausgestaltet sein, auf dem der Geräteträger in der zweiten Position aufliegt.

Schließlich können auch noch die Führung und das zweite Lager vollständig entlastet werden, wenn die Vorrichtung vier zweite Kurbelhebel aufweist, wobei jeweils zwei zweite Kurbelhebel starr miteinander verbunden sind, zwei der Kurbelhebel um die zweite Drehachse und die anderen zwei Kurbelhebel um eine dritte Drehachse drehbar sind und zweite und dritte Drehachse parallel zueinander angeordnet sind. Dann liegt der Geräteträger in der zweiten Position über die Anschlagselemente auf insgesamt vier Anschlägen auf. Hierdurch wird erreicht, dass in der zweiten Position auf die Führung über den Geräteträger keine Kraft eingeleitet werden kann. Weiterhin können bei der vorgenannten Ausgestaltung die zweiten Wellen und/oder zweiten Lager entlastet werden, wenn der Geräteträger in der zweiten Position auf zweiten Auflageflächen aufliegt. Die zweiten Auflageflächen können beispielsweis durch jeweils ein Verbindungselement realisiert werden, welches jeweils die zwei auf zweiten Drehachse bzw. die zwei auf der dritten Drehachse angeordneten zweiten Kurbelhebel starr miteinander verbinden und auf denen jeweils der Geräteträger in der zweiten Position aufliegt und so die Verbindungselemente als Auflageflächen wirken. Die zweiten Auflageflächen können auch dadurch realisiert werden, dass die zweiten Kurbelhebel jeweils eine zweite Auflagefläche aufweisen oder mit einer zweiten Auflagefläche starr verbunden sind.

Sofern nur eine Getriebestange verwendet werden soll kann jeweils ein zweiter Kurbelhebel der zweiten Drehachse mit einem zweiten Kurbelhebel der dritten Drehachse mittels einer Koppelstange gelenkig verbunden sein.

Sofern keine Koppelstange verwendet werden soll oder aus Platzgründen kann, kann jeweils ein Kurbelhebel der zweiten und dritten Drehachse über jeweils eine Getriebestange mit dem ersten Kurbelhebel oder dem ersten Pleuel gelenkig verbunden sein. Die bevorzugte Auswahl richtet sich auch nach der Einbausituation des Geräteträgers.

Wenn der Anschlag und das Anschlagselement so ausgebildet sind, dass beim Anliegen des Anschlagselements an dem Anschlag der Anschlag das Anschlagselement teilweise formschlüssig umgibt, ist der Geräteträger beim Anliegen des Anschlagselements an dem Anschlag mit der Grundträger in der zweiten Position verriegelt. Hierdurch werden die Einsatzmöglichkeiten der Vorrichtung weiter erhöht.

Eine mögliche Ausgestaltung ist es, wenn der Anschlag als Riegel als in Ansicht teilkreis- bis kreisförmig ausgebildet ist und der Anschlag so ausgebildet ist, dass er beim Anliegen des Anschlagselements an dem Anschlag das Anschlagselement bis zu 50% umgibt. Es sind aber auch andere Formen des Anschlagselements denkbar, um eine Verriegelung zu realisieren, solange das Anschlagselement zum Teil von dem Anschlag formschlüssig umgeben ist.

Die Erfindung wird nachfolgend anhand der Figuren näher erläutert. Es zeigen:
- Figur 1: eine seitliche Ansicht eines ersten erfindungsgemäßen Ausführungsbeispiels einer erfindungsgemäßen Vorrichtung mit einer Lage eines Geräteträgers zwischen einer ersten und zweiten Position
- Figur 2: eine seitliche Ansicht des ersten erfindungsgemäßen Ausführungsbeispiels aus Figur 1 mit einer Lage des Geräteträgers in der zweiten (oberen) Position
- Figur 3: eine seitliche Ansicht des ersten erfindungsgemäßen Ausführungsbeispiels aus Figuren 1 und 2 mit einer Lage des Geräteträgers in der ersten (unteren) Position
- Figur 4: eine seitliche Ansicht eines zweiten erfindungsgemäßen Ausführungsbeispiels in einer Lage zwischen der ersten und zweiten Position
- Figur 5: eine seitliche Ansicht des zweiten erfindungsgemäßen Ausführungsbeispiels in der zweiten (oberen) Position
- Figur 6: eine seitliche Ansicht des zweiten erfindungsgemäßen Ausführungsbeispiels in der ersten (unteren) Position
- Figur 7: eine dreidimensionale Ansicht des Grundträgers des zweiten Ausführungsbeispiels des zweiten erfindungsgemäßen Ausführungsbeispiels
- Figur 8: eine dreidimensionale Ansicht des Geräteträgers mit Anbauteilen des zweiten erfindungsgemäßen Ausführungsbeispiels
- Figur 9: eine dreidimensionale Teilansicht der in den Figuren 7 und 8 dargestellten Bauteile
- Figur 10: eine weitere mögliche Ausgestaltung eines zweiten Kurbelhebels im Zusammenwirken mit dem Geräteträger in der zweiten Position.

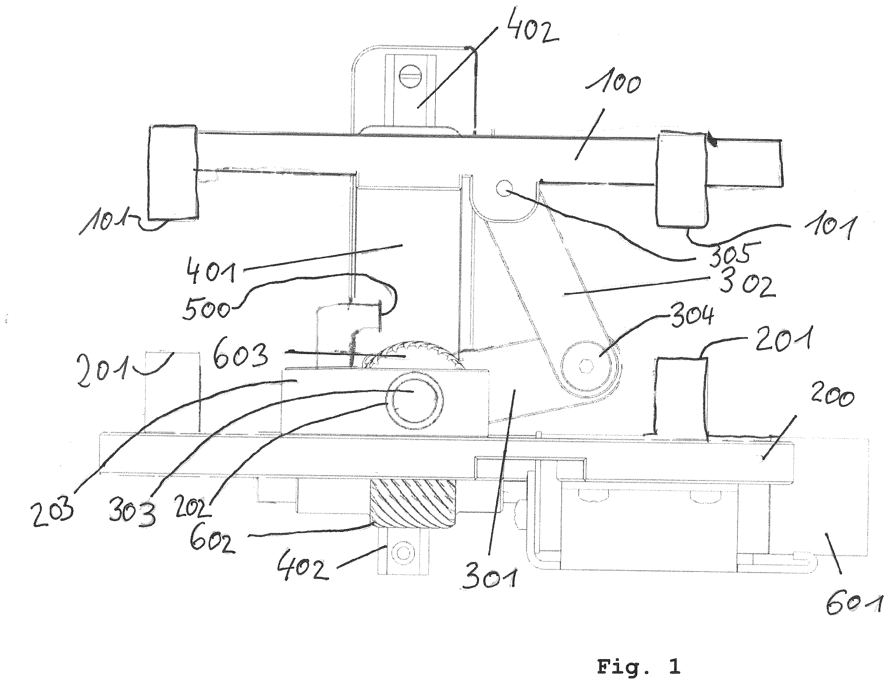

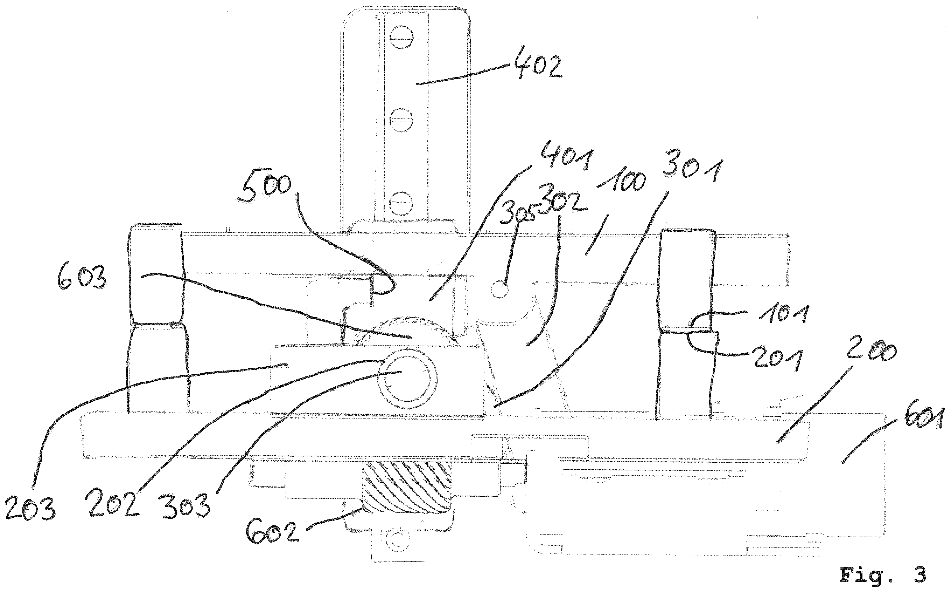

In den Figuren 1-3 erkennt man einen Geräteträger 100, einen Grundträger 200, einen ersten Kurbelhebel 301, eine Pleuelstange 302, eine Führung aufweisend einen Führungsschlitten 401 und eine Führungsschiene 402, einen Anschlag 500, ein Antriebselement in Form eines Elektromotors 601, ein erstes Getriebe aufweisend ein Schneckenrad 602 und ein Stirnzahnrad 603. Am Geräteträger 100 sind Auflagen 101 ausgebildet, am Grundträger 200 sind erste Auflageflächen 201 ausgebildet. In der ersten Position (Figur 3) liegt der Geräteträger 100 mit den Auflagen 101 auf den ersten Auflageflächen 201 des Grundträgers 200 auf. Die Auflage 101 und /oder die erste Auflagefläche 201 können aber auch separate Bauteile sein, wenn sie jeweils mit dem Geräteträger 100 bzw. dem Grundträger 200 starr verbunden sind. Auch können der Geräteträger 100 und /oder der Grundträger 200 so ausgestaltet sein, dass auf die Auflage 101 und/oder die erste Auflagefläche 201 als Ausbildung verzichtet werden kann, wenn deren Funktionalität der Auflage des Geräteträgers 100 auf dem Grundträger 200 in der ersten Position in anderer Weise gewährleistet ist.

Ein erstes Gelenk 304 verbindet den ersten Kurbelhebel 301 mit dem Pleuel 302, ein zweites Gelenk 305 den Pleuel 302 mit dem Geräteträger 100. Eine Lagerung des Schneckenrades 602 ist nicht dargestellt. Das Stirnzahnrad 603 ist über eine erste Welle 303 und ein erstes Lager 202 um eine erste Drehachse drehbar gelagert, wobei das erste Lager über einen Halter 203 starr mit dem Grundträger verbunden ist. Das Stirnzahnrad 603 ist starr mit der ersten Welle 303 verbunden und so gelagert. Die Lagerung des Stirnzahnrades 603 kann auch durch einen Dorn erfolgen, auf dem das Stirnzahnrad 603 über das erste Lager 202 drehbar angeordnet ist. Hierbei kann der Dorn direkt an dem Grundträger 200 oder dem Halter 203 angeordnet oder ausgebildet sein und so auf eine erste Welle 303 verzichtet werden. Das erste Lager 202 kann beispielsweise als Gleitlager, Kugellager, Walzenlager oder Nadellager ausgestaltet sein. Der Elektromotor kann Bürsten aufweisen, bürstenlos sein oder als Schrittmotor oder als Linearmotor ausgestaltet sein. Anstelle des Schneckenrades 602 kann auch ein weiteres Stirnzahnrad Verwendung finden. Bei der Ausgestaltung des Elektromotors 601 in Form eines Linearmotors wird das Schneckenrad 602 vorteilhafterweise durch eine Zahnstange ersetzt. An Stelle des Elektromotors 601 kann beispielsweise auch ein pneumatischer oder hydraulischer Antrieb Verwendung finden.

Der erste Kurbelhebel 301 ist starr mit dem Stirnzahnrad 603 verbunden. Die Führungsschiene 402 ist starr mit dem Grundträger und der Führungsschlitten 401 starr mit dem Geräteträger 100 verbunden. Der Elektromotor 601 treibt über das Schneckenrad 602 das Stirnzahnrad 603 an.

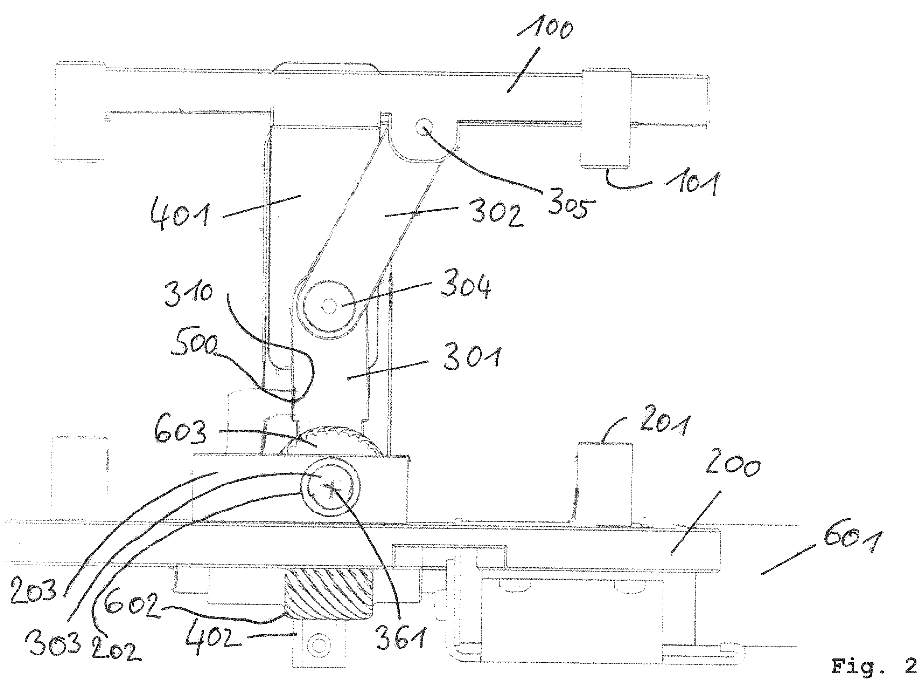

Wenn sich das Stirnzahnrad 603 ausgehend von der dargestellten Position in Figur 1 gegen den Uhrzeigersinn dreht sich so auch der erste Kurbelhebel 301 um die senkrecht zur Zeichnungsebene stehende erste Drehachse 361, so dass der Geräteträger 101 entlang der Führungsschiene 402 solange nach oben gedrückt wird, bis die erste Drehachse, das erste Gelenk 304 und das zweite Gelenk 305 in einer Linie liegen und in diesem Moment der Geräteträger seinen oberen Totpunkt einnimmt. Beim Weiterdrehen des ersten Zahnrades 603 entgegen dem Uhrzeigersinn bewegt sich der Geräteträger 100 solange nach unten, bis der erste Kurbelhebel 301 mit seiner als Anschlagselement 310 ausgestalteten Seite gegen den Anschlag 500 stößt und so am Weiterdrehen gehindert wird und so seine zweite Position einnimmt. Diese Situation ist in Figur 2 dargestellt. Diese Situation kann durch einen oder mehrere Sensoren erfasst werden und der Elektromotor abgeschaltet werden, um ihn vor Überlastung zu schützen. Diese Detektion kann beispielweise durch ein Messen des von dem Motor aufgenommenen Stromes oder Lagesensoren ausgeführt werden, wobei die Lagesensoren beispielsweise induktiv, kapazitiv und /oder optisch ausgestaltet werden und die Lage des Anschlagselementes oder des ersten Kurbelhebels erfassen können. Bei einem Schrittmotor können auch die erforderlichen Schritte des Schrittmotors gezählt werden die erforderlich sind, damit der Geräteträger die zweite Position einnimmt.

Wenn in der in Figur 2 dargestellten zweiten Position eine Kraft von oben auf den Geräteträger 100 drückt, wird diese Kraft über das zweite Gelenk 305, den Pleuel 302 das erste Gelenk 304 und den ersten Kurbelhebel 301 mit dem Anschlagselement 310 in den Anschlag 500 und das erste Lager 202 und gegebenenfalls in die Führungsschiene 402 geleitet. Eine Belastung des Schneckenrades 602 und des Elektromotors 601 findet nicht statt. Auf dem Geräteträger 100 können die zu tragenden Geräte beispielsweise mittels Schrauben, Klipsen oder durch Verlöten oder Verschweißen befestigt sein. Der Geräteträger kann auch als Bauteil des in der Höhe zu verstellenden Gerätes ausgestaltet sein, beispielweise als Gehäuseteil des in der Höhe zu verstellenden Gerätes.

Wenn der Geräteträger 100 von der zweiten Position in Figur 2 in die erste Position in Figur 3 verfahren werden soll treibt der Elektromotor das Stirnzahnrad 603 über das Schneckenrad 602 derart an, dass sich das Stirnzahnrad 602 im Uhrzeigersinn dreht, der erste Kurbelhebel um seine Drehachse im Uhrzeigersinn verdreht wird, der Geräteträger über den Pleuel 302 zunächst bis zum oberen Totpunkt angehoben wird und dann beim Weiterdrehen der Geräteträger 100 solange sich nach unten bewegt, bis er mit seinen Auflagen 101 auf den ersten Auflageflächen 201 des Grundträgers 200 aufliegt und die in Figur 3 dargestellte erste Position einnimmt. Auch diese Situation kann durch einen oder mehrere Sensoren erfasst werden und der Elektromotor abgeschaltet werden, um ihn vor Überlastung zu schützen. Diese Detektion kann beispielweise durch ein Messen des von dem Motor aufgenommenen Stromes oder Lagesensoren ausgeführt werden, wobei die Lagesensoren beispielsweise induktiv, kapazitiv und /oder optisch ausgestaltet werden können. Bei einem Schrittmotor können auch die erforderlichen Schritte des Schrittmotors gezählt werden die erforderlich sind, damit der Geräteträger die erste Position einnimmt.

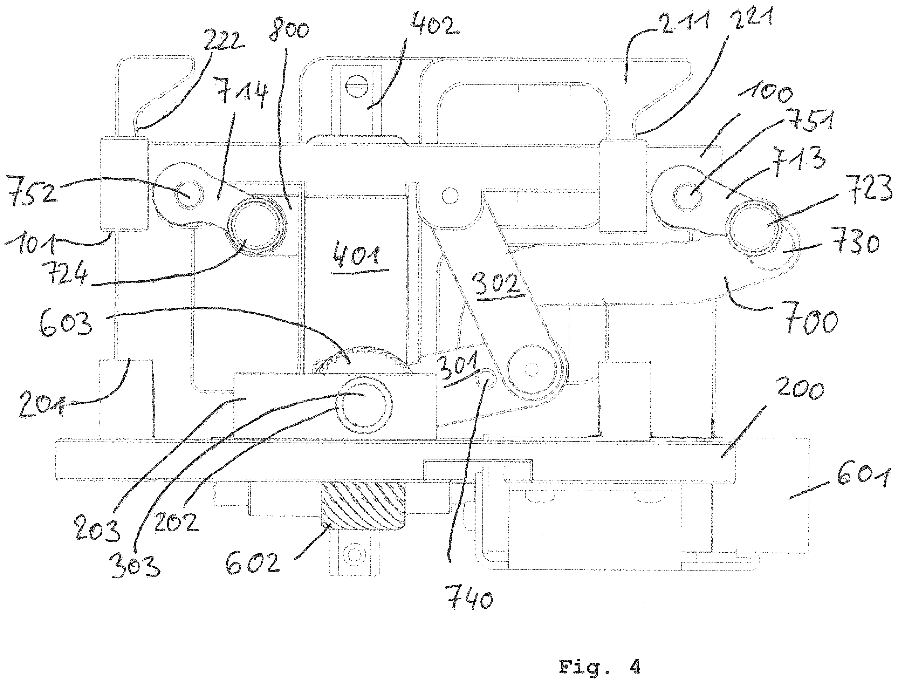

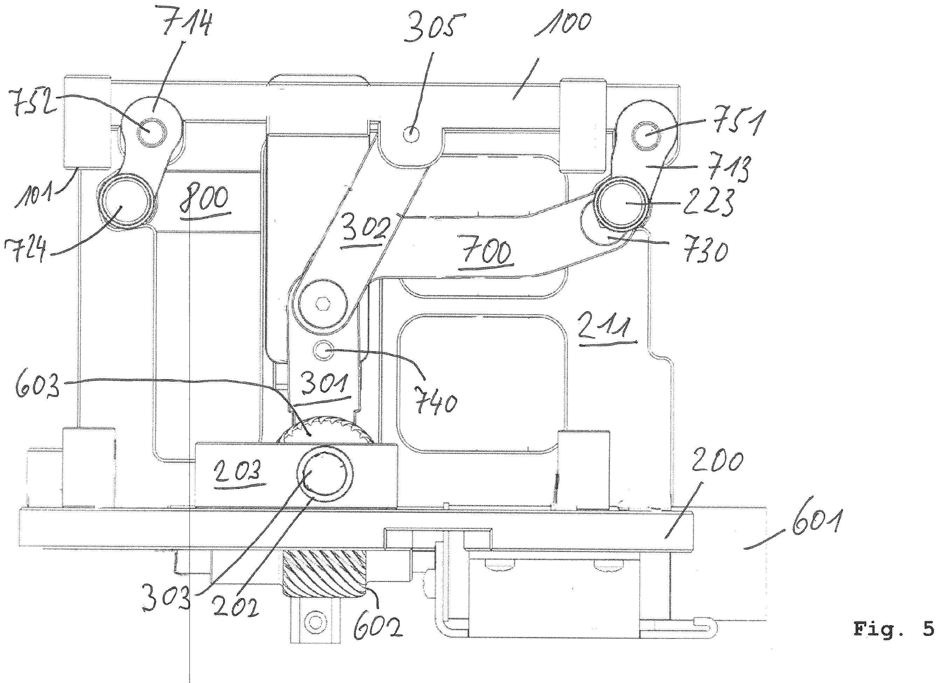

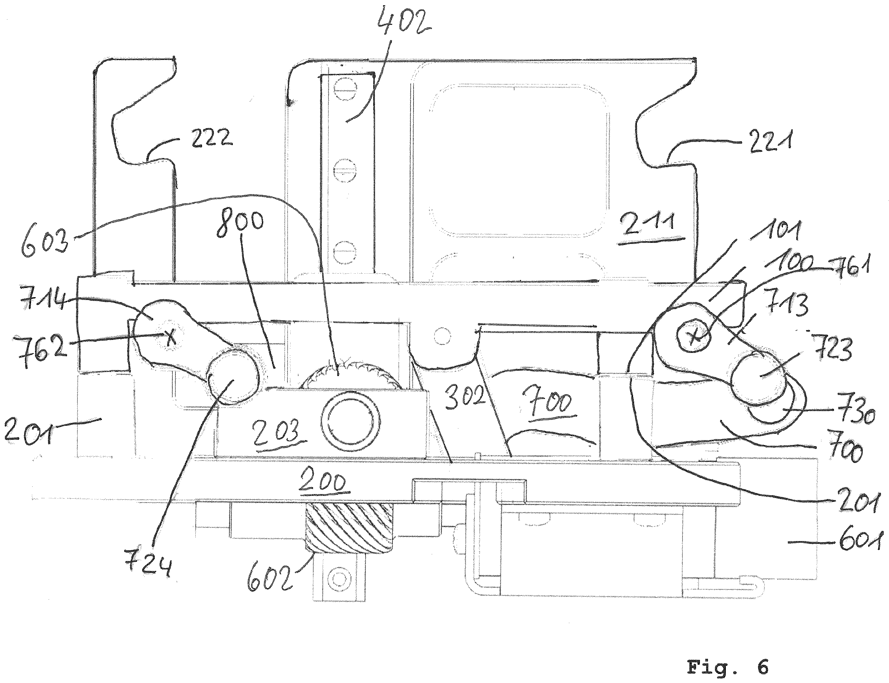

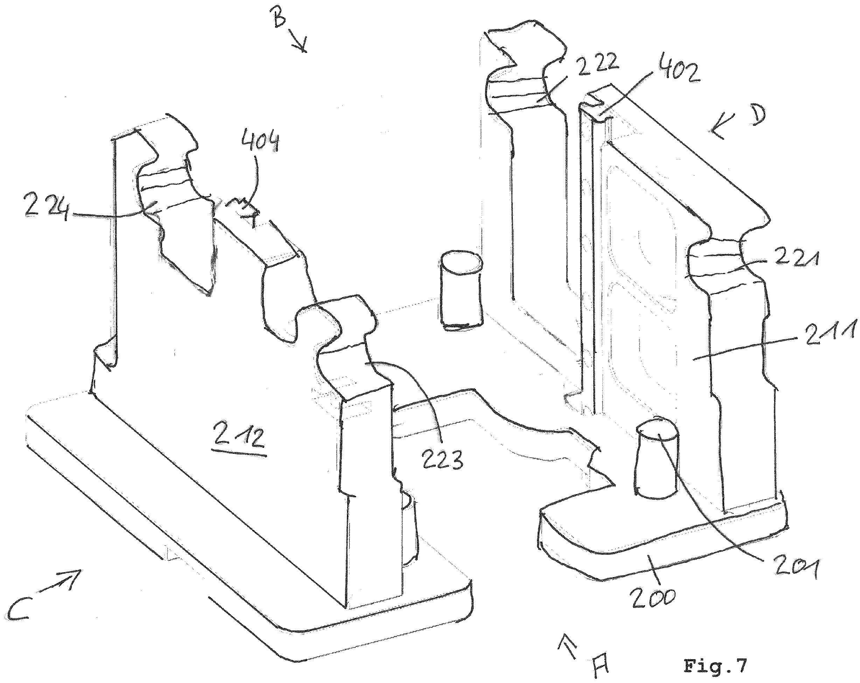

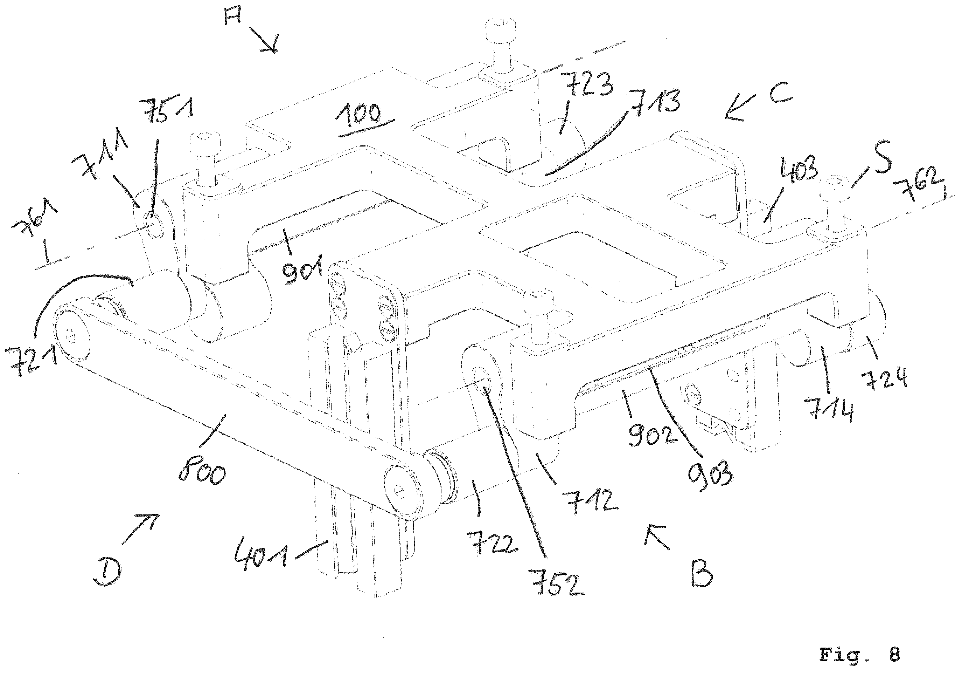

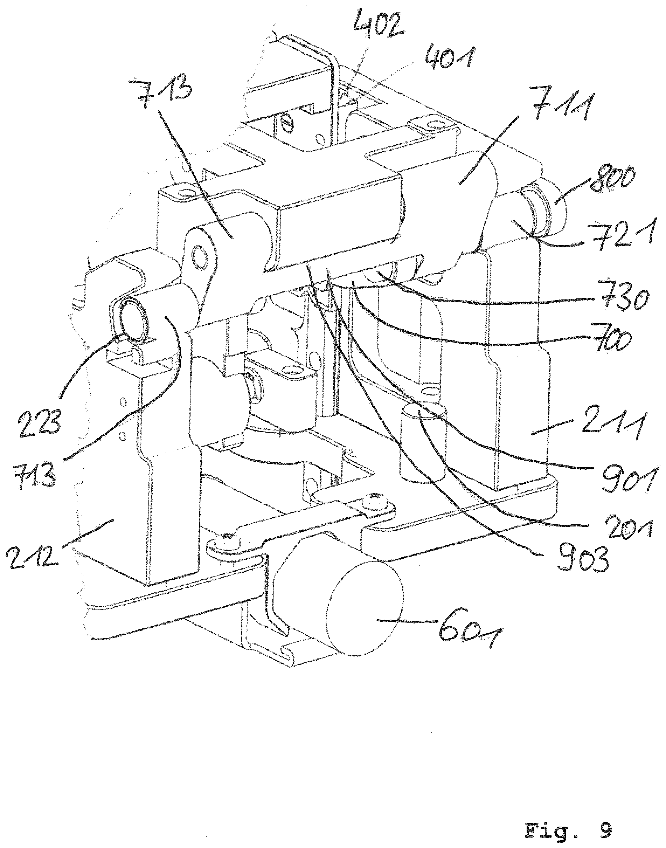

Das in den Figuren 4-9 dargestellte zweite Ausführungsbeispiel einer besonders bevorzugten erfindungsgemäßen Vorrichtung weist mit Ausnahme des Anschlags 500 alle aus den Figuren 1-3 bekannten Bauelemente und Funktionsweisen auf. Zusätzlich erkennt man eine Getriebestange 700, zweite Kurbelhebel 711-714, ein drittes Gelenk 730, ein viertes Gelenk 740, zweite Wellen 751, 752, ein erstes Seitenteil 211 und ein zweites Seitenteil 212 des Grundträgers 200,eine Führungsschiene 404 (Fig.7), einen Führungsschlitten 403 (Fig.8) Anschläge 221-224, Anschlagselemente 721-724, zweite Wellen 751, 752, eine Koppelstange 800 und zwei Verbindungselemente 901,902.In den Figuren 4-6 werden weiterhin die zweiten Kurbelhebel 711 bzw. 712 durch die zweiten Kurbelhebel 713 bzw. 714 verdeckt. Das zweite Seitenteil 212 mit den Anschlägen 223, 224 und der Führungsschiene 404 sowie der am Geräteträger befestigte Führungsschlitten 403 sind in den Figuren 4-6 nicht dargestellt, um die ansonsten verdeckten Bauteile darstellen und beschreiben zu können.
3
Die Getriebestange 700 ist über das vierte Gelenk 740 mit dem ersten Kurbelhebel 301 und über das dritte Gelenk 730 mit dem zweiten Kurbelhebel 711 verbunden. Die zweiten Kurbelhebel 711 -714 sind grundsätzlich gleich aufgebaut und weisen die gleiche Funktion auf. Der zweite Kurbelhebel 711 ist zusätzlich so ausgestaltet, dass er über das dritte Gelenk 730 mit der Getriebestange 700 verbunden ist. Die zweiten Kurbelhebel 711 und 713 sind auf der zweiten Welle 751 und die zweiten Kurbelhebel 712 und 714 sind auf der zweiten Welle 752 befestigt, wobei die zweiten Kurbelhebel 711, 713 und zweite Welle 751 um die zweite Drehachse 761 und die zweiten Kurbelhebel 712, 714 und zweite Welle 752 um eine dritte Drehachse 762 drehbar sind und die zweite Drehachse 761 und die dritte Drehachse 762 parallel zueinander liegen. Die Anschlagselemente 721 bzw. 723 sind im Abstand zur Drehachse 761 der zweiten Welle 751 auf den zweiten Kurbelhebeln 711 bzw.713 und die Anschlagselemente 722, 724 sind im Abstand zur dritten Drehachse 762 der zweiten Welle 752 auf den zweiten Kurbelhebeln 712 bzw. 714 angebracht. Ein Verbindungselement 901 verbindet die zweiten Kurbelhebel 711,713 miteinander, ein Verbindungselement 902 verbindet die zweiten Kurbelhebel 712, 714 miteinander. Die Verbindungselemente 901, 902 sind so ausgestaltet, dass in der zweiten Position der Geräteträger 100 auf ihnen aufliegt (Fig. 9 für Verbindungselement 901) und so die Verbindungselemente 901, 902 als zweite Auflageflächen 903, 904 dienen.

Der Geräteträger 100 ist über die Führungsschlitten 401, 403 in den Führungsschienen 402, 404 geführt, wobei die der Führungsschlitten 401 in der Führungsschiene 402 und die der Führungsschlitten 403 in der Führungsschiene 404 geführt ist.

In Figur 8 sind zusätzlich 4 Innensechskantschrauben S dargestellt, mit denen ein zu befestigendes Gerät auf dem Geräteträger 100 befestigt werden kann. Die Befestigung des Gerätes kann aber auch durch eine andere Anzahl von Schrauben auch anderer Art oder sonstige dem Fachmann geläufigen Verbindungen wie beispielsweise Schweißen oder mittels einer Klips-Verbindung sein.

Wenn sich das Stirnzahnrad 603 ausgehend von der in Figur 4 dargestellten Position entgegen dem Uhrzeigersinn dreht bewegt sich der Geräteträger 100 nach oben bis er den oberen Totpunkt erreicht. Gleichzeitig werden die Anschlagselemente 721-724 über die Getriebestange 700 und zweiten Kurbelhebel 711-714 nach rechts verfahren und behalten diese rechte Position weitgehend bei. Beim Weiterdrehen entgegen dem Uhrzeigersinn werden die zweiten Kurbelhebel 711-714 nach links verschwenkt, gleichzeitig senkt sich der Geräteträger 100 etwas und die Anschlagselemente 721 -724 gelangen in Anlage mit den Anschlägen 221-224, wobei das Anschlagselement 721 am Anschlag 221, das Anschlagselement 722 am Anschlag 222, das Anschlagselement 723 am Anschlag 223 und das Anschlagselement 724 am Anschlag 224 anliegt. Gleichzeitig liegt der Geräteträger 100 auf den Verbindungselementen 901, 902 auf. Der zweite Kurbelhebel 711 wird durch die Getriebestange 700 über das dritte Gelenk 730 direkt angetrieben, der zweite Kurbelhebel 713 über den zweiten Kurbelhebel 711 und die zweite Welle 751, der zweite Kurbelhebel 712 von dem zweiten Kurbelhebel 711 über die Koppelstange 800 und der zweite Kurbelhebel 714 von dem zweiten Kurbelhebel 712 über die zweite Welle 752 angetrieben.

An Stelle der zweiten Wellen 751, 752 können auch Dorne vorhanden sein, um die zweiten Kurbelhebel 711-714 mittels Lagern so zu lagern, dass die die zweiten Kurbelhebel 711, 713 um die Drehachse 661 und die zweiten Kurbelhebel 712, 714 um die Drehachse 662 drehbar sind. Dann sind die zweiten Kurbelhebel 711, 713 nur über das Verbindungselement 901 starr verbunden, während die zweiten Kurbelhebel 712, 714 nur über das Verbindungselement 902 starr verbunden sind.

Sofern auf die Koppelstange 800 verzichtet werden soll, können die zweiten Kurbelhebel 712, 714 über eine zusätzliche Getriebestange, die den zweiten Kurbelhebel 712 oder 714 mit dem Pleuel 302 oder dem ersten Kurbelhebel 301 gelenkig verbindet, angetrieben werden.

Da die Anschläge 221-224 bei Anlage der Anschlagselemente 721-724 an den Anschlägen 221-224 jeweils die Anschlagselemente 721-724 zu 50% umschließen bewirkt die Anlage der Anschlagselemente 721 -724 an den Anschlägen 221-224 eine Verriegelung des Geräteträgers 100 mit dem Grundträger 200.

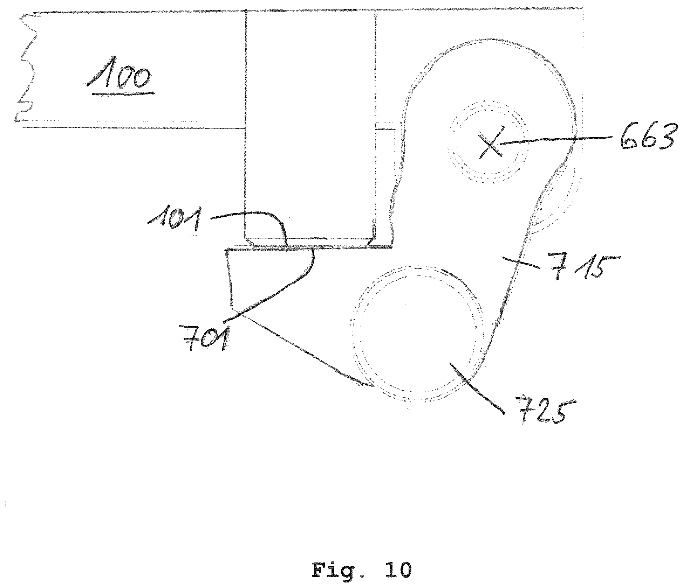

In Figur 10 erkennt man einen Geräteträger 100 mit Auflage 101, einen zweiten Kurbelhebel 715 mit einer zweiten Auflagefläche 701 und weiterhin ein Anschlagselement 725, dargestellt in der zweiten Position. Der zweite Kurbelhebel 715 ist um eine zweite Drehachse 663 schwenkbar. Diese Verschwenkbarkeit kann beispielsweise durch eine zweite Welle mit der zweiten Drehachse 663 oder durch ein auf einem Dorn angeordnetes Lager realisiert sein. In der dargestellten zweiten Position des Trägers 100 wird eine auf den Geräteträger einwirkende Kraft über die Auflage 101 des Geräteträgers 100 in die zweite Auflagefläche 701 des zweiten Kurbelhebels 715 eingeleitet und von dort über den zweiten Kurbelhebel 715 und das Anschlagselement 725 in einen nicht dargestellten Anschlag eingeleitet, der beispielsweise die Form einer der Anschläge 221-224 aufweisen kann. Der Geräteträger 100 kann vorzugsweise vier dieser zweiten Kurbelhebel 715 aufweisen, die sich vorzugsweise von den im zweiten Ausführungsbeispiel beschriebenen zweiten Kurbelhebeln 711-714 nur durch die Ausgestaltung der zweiten Auflagefläche 701 unterscheiden. Dann kann auf die Verbindungselemente 901, 902 als zweite Auflageflächen 903, 904 verzichtet werden.

In der vorstehenden Beschreibung werden gleichwirkende Teile mit gleichen Namen benannt, auch wenn sie gegebenenfalls eine unterschiedliche Ausprägung aufweisen. Dies wird aber wegen der damit einhergehenden besseren Erfassbarkeit der Erfindung als sachgemäß angesehen.

**Bezugszeichenliste:**

| | |
|---|---|
| Geräteträger | 100 |
| erste (untere)Position | |
| zweite (obere) Position | |
| Grundträger | 200 |
| erste Auflagefläche | 201 |
| Erstes Seitenteil | 211 |
| Zweites Seitenteil | 212 |
| Pleuel | 302 |
| erster Kurbelhebel | 301 |
| zweiter Kurbelhebel | 711, 712, 713, 714, 715 |
| erste Drehachse | 361 |
| zweite Drehachse | 761 |
| dritte Drehachse | 762 |
| erste Welle | 303 |
| zweite Welle | 751, 752 |
| erstes Gelenk | 304 |
| zweites Gelenk | 305 |
| drittes Gelenk | 730 |
| viertes Gelenk | 740 |
| Erstes Lager | 202 |
| Zweites Lager | |
| Führung aufweisend: | |
| Führungsschiene | 402, 404 |
| Führungsschlitten | 401, 403 |
| Anschlagselement | 310, 721, 722, 723, 724 |
| Anschlag | 500, 221, 222, 223, 224 |
| Erstes Getriebe aufweisend: | |
| Schneckenrad | 602 |
| Stirnzahnrad | 603 |
| Auflage | 101 |
| Erste Auflagefläche | 201 |
| Zweite Auflagefläche | 701, 903, 904 |
| Getriebestange | 700 |
| Koppelstange | 800 |
| Verbindungselement | 901, 902 |

## Patentansprüche

1. Vorrichtung aufweisend einen Grundträger (200) und einen Geräteträger (100), dessen Höhe zwischen einer ersten Position und einer zweiten Position relativ zu dem Grundträger 200 verstellbar ist, und der Geräteträger (100) in der ersten Position direkt oder über mit dem Grundträger verbundene Bauteile auf dem Grundträger (200) aufliegt,
wobei die Vorrichtung einen ersten Kurbelhebel (301) aufweist, wobei der erste Kurbelhebel (301) um eine erste Drehachse (361) verdrehbar ist, wobei ein Pleuel (302) über ein erstes Gelenk (304) mit dem ersten Kurbelhebel (301) und ein zweites Gelenk (305) mit dem Geräteträger verbunden ist,
wobei der erste Kurbelhebel (301) direkt oder über eine erste Welle (303) in einem ersten Lager (202) um eine erste Drehachse (361) gelagert ist und das erste Lager (202) mit dem Grundträger (200) verbunden ist,
wobei die Vorrichtung eine Führung (401, 402, 403, 404) für den Geräteträger (100) derart aufweist, dass der Geräteträger (100) mittels der Führung (401, 402, 403, 404) so geführt ist, dass er parallel zum Grundträger (200) verschiebbar ist,
wobei die Vorrichtung ein Anschlagselement (310, 721, 722, 723, 724) und einen Anschlag (500, 221, 222, 223, 224) aufweist, **dadurch gekennzeichnet, dass** das Anschlagselement (310, 721, 722, 723, 724, 725) mit dem ersten Kurbelhebel (301) oder dem Pleuel (302) starr oder über ein zweites Getriebe verbunden ist,
dass der Anschlag (500, 221, 222, 223, 224) in dem Grundträger (200) angeordnet oder mit dem Grundträger (200) verbunden ist,
dass durch Drehen des ersten Kurbelhebels (301) der Geräteträger beim Verfahren von der ersten zu der zweiten Position einen oberen Totpunkt überwindet und beim Weiterdrehen des ersten Kurbelhebels (301) das Anschlagselement (310,721, 722, 723, 724) mit dem Anschlag (500, 221, 222, 223, 224) in Anlage kommt.

2. Vorrichtung nach Patentanspruch 1, **dadurch gekennzeichnet, dass** der erste Kurbelhebel (301) mit einem Antriebselement (601) direkt oder über ein erstes Getriebe (602, 603) verbunden ist.

3. Vorrichtung nach Patentanspruch 2, **dadurch gekennzeichnet, dass** das Antriebselement als Elektromotor (601) ausgestaltet ist.

4. Vorrichtung nach einem der vorstehenden Patentansprüche, **dadurch gekennzeichnet, dass** das Anschlagselement (310) als Teil des ersten Kurbelhebels (301) ausgestaltet oder starr mit dem ersten Kurbelhebel verbunden ist.

5. Vorrichtung nach einem der Patentansprüche 1-3, **dadurch gekennzeichnet, dass** das Anschlagselement als Teil des Pleuel (302) ausgestaltet oder starr mit dem Pleuel (302) verbunden ist.

6. Vorrichtung nach einem der Patentansprüche 1-3, **dadurch gekennzeichnet, dass** das Anschlagselement (721, 722, 723, 724, 725) über ein zweites Getriebe verbunden ist.

7. Vorrichtung nach Patentanspruch 6, **dadurch gekennzeichnet, dass** das zweite Getriebe eine Getriebestange (700) aufweist, die mit dem ersten Kurbelhebel 301 oder dem Pleuel (302) gelenkig verbunden ist.

8. Vorrichtung nach Patentanspruch 7, **dadurch gekennzeichnet, dass** das zweite Getriebe einen zweiten Kurbelhebel (711, 712, 713, 714, 715) aufweist, dass der zweite Kurbelhebel (711, 712, 713, 714, 715) mittels eines zweiten Lagers um eine zweite Drehachse (761) drehbar gelagert ist und das Anschlagselement (721, 722, 723, 724, 725) im Abstand zur zweiten Drehachse 761 an dem zweiten Kurbelhebel (711, 712, 713, 714, 715) angeordnet ist und der zweite Kurbelhebel (711, 712, 713, 714, 715) mit der Getriebestange (700) im Abstand zur zweiten Drehachse (761) gelenkig verbunden ist.

9. Vorrichtung nach Patentanspruch 8, **dadurch gekennzeichnet, dass** der zweite Kurbelhebel (711, 713, 715) mittels einer zweiten Welle um die zweite Drehachse (761) drehbar mittels des zweiten Lagers gelagert ist und das zweite Lager mit dem Geräteträger (100) verbunden ist.

10. Vorrichtung nach Patentanspruch 8 oder 9, **dadurch gekennzeichnet, dass** der zweite Kurbelhebel (711, 712, 713, 714, 715) eine zweite Auflagefläche (701) aufweist oder mit einer zweiten Auflagefläche (903, 904) starr verbunden ist, dass der Geräteträger (100) in der zweiten Position auf der zweiten Auflagefläche (701, 903, 904) aufliegt.

11. Vorrichtung nach einem der Patentansprüche 7 bis 10, **dadurch gekennzeichnet dass** sie zwei zweite Kurbelhebel (711, 713) aufweist und die zwei zweiten Kurbelhebel (711, 713) um die zweite Drehachse 761 drehbar gelagert sind.

12. Vorrichtung nach Patentanspruch 9 und 11, **dadurch gekennzeichnet, dass** die zwei zweiten Kurbelhebel (711, 713) an der zweiten Welle (751) angeordnet und über die zweite Welle (751) starr miteinander verbunden sind.

13. Vorrichtung nach Patentanspruch 11 oder 12, **dadurch gekennzeichnet dass** die zwei zweiten Kurbelhebel (711, 712, 713, 714) über ein Verbindungselement (901, 902) starr miteinander verbunden sind.

14. Vorrichtung nach Patentanspruch 10 und 13, **dadurch gekennzeichnet, dass** das Verbindungselement (901, 902) als Auflagefläche (903, 904) für den Geräteträger (100) ausgestaltet ist.

15. Vorrichtung nach einem der Patentansprüche 8 bis 14, **dadurch gekennzeichnet, dass** sie vier zweite Kurbelhebel (711, 712, 713, 714) aufweist, wobei jeweils zwei zweite Kurbelhebel (711, 712, 713, 714) starr miteinander verbunden sind und zwei der zweiten Kurbelhebel (711, 713) um die zweite Drehachse (761) drehbar und die restlichen zwei zweiten Kurbelhebel (712, 714) um eine dritte Drehachse (762) drehbar sind, dass die zweite Drehachse (761) und dritte Drehachse (762) parallel zueinander angeordnet sind, dass ein zweiter Kurbelhebel (711) der zweiten Drehachse (761) mit einem zweiten Kurbelhebel (712) der dritten Drehachse 762 über eine Koppelstange (800) gelenkig verbunden ist, dass nur ein Kurbelhebel (711) der vier vorhandenen zweiten Kurbelhebel (711, 712, 713, 714) über die Getriebestange (700) mit dem Pleuel (302) oder dem ersten Kurbelhebel (301) gelenkig verbunden ist.

16. Vorrichtung nach einem der Patentansprüche 8 bis 14, **dadurch gekennzeichnet, dass** sie vier zweite Kurbelhebel (711, 712, 713, 714) aufweist, wobei jeweils zwei zweite Kurbelhebel (711, 712, 713, 714) starr miteinander verbunden sind und zwei der zweiten Kurbelhebel (711, 713) um die zweite Drehachse (761) drehbar und die restlichen zwei zweiten Kurbelhebel (712, 714) um eine dritte Drehachse (762) drehbar sind, wobei die zweite Drehachse (761) und dritte Drehachse (762) parallel zueinander angeordnet sind, dass jeweils ein Kurbelhebel (711, 712, 713, 714) der zweiten Drehachse (761) und dritten Drehachse (762) mit dem ersten Kurbelhebel (301) oder dem Pleuel (302) über jeweils eine Getriebestange (700) gelenkig verbunden ist.

17. Vorrichtung nach einem der vorstehenden Patentansprüche, **dadurch gekennzeichnet, dass** das Anschlagselement (721, 722, 723, 724) in Ansicht teilkreis- bis kreisförmig ausgebildet ist.

18. Vorrichtung nach einem der vorstehenden Patentansprüche, **dadurch gekennzeichnet, dass** der Anschlag und das Anschlagselement (721, 722, 723, 724) so ausgebildet sind, dass beim Anliegen des Anschlagselements (721, 722, 723, 724) an dem Anschlag (221, 222, 223, 224) der Anschlag (221, 222, 223, 224) das Anschlagselement (721, 722, 723, 724) teilweise formschlüssig umgibt.

19. Vorrichtung nach Patentanspruch 18, **dadurch gekennzeichnet, dass** der Anschlag (221, 222, 223, 224) beim Anliegen des Anschlagselements (721, 722, 723, 724) an dem Anschlag (221, 222, 223, 224) das Anschlagselement bis zu 50%, insbesondere über 30% umgibt.

## Claims

1. Apparatus having a base carrier (200) and an equipment carrier (100), the height of which can be adjusted between a first position and a second position relative to the base carrier (200), and the equipment carrier (100), in the first position, rests on the base carrier (200) directly or by way of components connected to the base carrier,
wherein the apparatus has a first crank lever (301), wherein the first crank lever (301) can be rotated about a first axis of rotation (361), wherein a connecting rod (302) is connected to the first crank lever (301) by way of a first joint (304) and a second joint (305) is connected to the equipment carrier,
wherein the first crank lever (301) is mounted, directly or by way of a first shaft (303), in a first bearing (202), about a first axis of rotation (361) and the first bearing (202) is connected to the base carrier (200),
wherein the apparatus has a guide (401, 402, 403, 404) for the equipment carrier (100), such that the equipment carrier (100) is guided by means of the guide (401, 402, 403, 404) such that it can be displaced parallel to the base carrier (200),
wherein the apparatus has a stop element (310, 721, 722, 723, 724) and a stop (500, 221, 222, 223, 224), **characterized**
**in that** the stop element (310, 721, 722, 723, 724, 725) is connected to the first crank lever (301) or the connecting rod (302) rigidly or by way of a second mechanism,
**in that** the stop (500, 221, 222, 223, 224) is arranged in the base carrier (200) or is connected to the base carrier (200), in that, as a result of rotation of the first crank lever (301), the equipment carrier overcomes an upper dead centre during the displacement from the first to the second position, and the stop element (310, 721, 722, 723, 724) comes into abutment with the stop (500, 221, 222, 223, 224) during the further rotation of the first crank lever (301).

2. Apparatus according to Patent Claim 1, **characterized in that** the first crank lever (301) is connected to a drive element (601) directly or by way of a first mechanism (602, 603) .

3. Apparatus according to Patent Claim 2, **characterized in that** the drive element is designed as an electric motor (601).

4. Apparatus according to one of the preceding patent claims, **characterized in that** the stop element (310) is designed as part of the first crank lever (301) or is rigidly connected to the first crank lever.

5. Apparatus according to one of Patent Claims 1-3, **characterized in that** the stop element is designed as part of the connecting rod (302) or is rigidly connected to the connecting rod (302).

6. Apparatus according to one of Patent Claims 1-3, **characterized in that** the stop element (721, 722, 723, 724, 725) is connected by way of a second mechanism.

7. Apparatus according to Patent Claim 6, **characterized in that** the second mechanism has a mechanism rod (700) which is connected to the first crank lever (301) or the connecting rod (302) in an articulated manner.

8. Apparatus according to Patent Claim 7, **characterized in that** the second mechanism has a second crank lever (711, 712, 713, 714, 715), **in that** the second crank lever (711, 712, 713, 714, 715) is mounted so as to be able to rotate about a second axis of rotation (761) by means of a second bearing, and the stop element (721, 722, 723, 724, 725) is arranged on the second crank lever (711, 712, 713, 714, 715), at a distance from the second axis of rotation (761), and the second crank lever (711, 712, 713, 714, 715) is connected to the mechanism rod (700) in an articulated manner, at a distance from the second axis of rotation (761).

9. Apparatus according to Patent Claim 8, **characterized in that** the second crank lever (711, 713, 715) is mounted, by means of a second shaft, so as to be able to rotate about the second axis of rotation (761) by means of the second bearing, and the second bearing is connected to the equipment carrier (100) .

10. Apparatus according to Patent Claim 8 or 9, **characterized in that** the second crank lever (711, 712, 713, 714, 715) has a second bearing surface (701) or is rigidly connected to a second bearing surface (903, 904), **in that** the equipment carrier (100), in the second position, rests on the second bearing surface (701, 903, 904).

11. Apparatus according to one of Patent Claims 7 to 10, **characterized in that** it has two second crank levers (711, 713) and the two second crank levers (711, 713) are mounted so as to be able to rotate about the second axis of rotation (761) .

12. Apparatus according to Patent Claims 9 and 11, **characterized in that** the two second crank levers (711, 713) are arranged on the second shaft (751) and are rigidly connected to one another by way of the second shaft (751).

13. Apparatus according to Patent Claim 11 or 12, **characterized in that** the two second crank levers (711, 712, 713, 714) are rigidly connected to one another by way of a connecting element (901, 902).

14. Apparatus according to Patent Claims 10 and 13, **characterized in that** the connecting element (901, 902) is designed as a bearing surface (903, 904) for the equipment carrier (100).

15. Apparatus according to one of Patent Claims 8 to 14, **characterized in that** it has four second crank levers (711, 712, 713, 714), wherein in each case two second crank levers (711, 712, 713, 714) are rigidly connected to one another, and two of the second crank levers (711, 713) can be rotated about the second axis of rotation (761) and the remaining two second crank levers (712, 714) can be rotated about a third axis of rotation (762), **in that** the second axis of rotation (761) and third axis of rotation (762) are arranged parallel to each other, **in that** a second crank lever (711) of the second axis of rotation (761) is connected to a second crank lever (712) of the third axis of rotation (762) in an articulated manner by way of a coupling rod (800), **in that** only one crank lever (711) of the four second crank levers (711, 712, 713, 714) present is connected to the connecting rod (302) or the first crank lever (301) in an articulated manner by way of the mechanism rod (700).

16. Apparatus according to one of Patent Claims 8 to 14, **characterized in that** it has four second crank levers (711, 712, 713, 714), wherein in each case two second crank levers (711, 712, 713, 714) are rigidly connected to one another, and two of the second crank levers (711, 713) can be rotated about the second axis of rotation (761) and the remaining two second crank levers (712, 714) can be rotated about a third axis of rotation (762), wherein the second axis of rotation (761) and third axis of rotation (762) are arranged parallel to each other, **in that** a respective crank lever (711, 712, 713, 714) of the second axis of rotation (761) and third axis of rotation (762) is connected to the first crank lever (301) or the connecting rod (302) in an articulated manner by way of a respective mechanism rod (700).

17. Apparatus according to one of the preceding patent claims, **characterized in that** the stop element (721, 722, 723, 724) is of partially circular to circular configuration in view.

18. Apparatus according to one of the preceding patent claims, **characterized in that** the stop and the stop element (721, 722, 723, 724) are configured such that, when the stop element (721, 722, 723, 724) bears against the stop (221, 222, 223, 224), the stop (221, 222, 223, 224) partially surrounds the stop element (721, 722, 723, 724) in a form-fitting manner.

19. Apparatus according to Patent Claim 18, **characterized in that**, when the stop element (721, 722, 723, 724) bears against the stop (221, 222, 223, 224), the stop (221, 222, 223, 224) surrounds the stop element up to an extent of 50%, in particular over 30%.

## Revendications

1. Dispositif présentant un support de base (200) et un support d'appareil (100) dont la hauteur peut être réglée entre une première position et une deuxième position par rapport au support de base (200), et le support d'appareil (100), dans la première position, reposant directement, ou par le biais de composants connectés au support de base, sur le support de base (200),
le dispositif présentant un premier levier de manivelle (301), le premier levier de manivelle (301) pouvant tourner autour d'un premier axe de rotation (361), une bielle (302) étant connectée par le biais d'une première articulation (304) au premier levier de manivelle (301) et par le biais d'une deuxième articulation (305) au support d'appareil,
le premier levier de manivelle (301) étant supporté directement ou par le biais d'un premier arbre (303) dans un premier palier (202) autour d'un premier axe de rotation (361) et le premier palier (202) étant connecté au support de base (200),
le dispositif présentant un guide (401, 402, 403, 404) pour le support d'appareil (100), de telle sorte que le support d'appareil (100) soit guidé au moyen du guide (401, 402, 403, 404) de telle sorte qu'il puisse être déplacé parallèlement au support de base (200),
le dispositif présentant un élément de butée (310, 721, 722, 723, 724) et une butée (500, 221, 222, 223, 224),
**caractérisé en ce que**
l'élément de butée (310, 721, 722, 723, 724, 725) est connecté au premier levier de manivelle (301) ou à la bielle (302) rigidement ou par le biais d'une deuxième transmission,
la butée (500, 221, 222, 223, 224) est disposée dans le support de base (200) ou est connectée au support de base (200),
par rotation du premier levier de manivelle (301), le support d'appareil, lors du déplacement de la première à la deuxième position, dépasse un point mort haut et lors de la poursuite de la rotation du premier levier de manivelle (301), l'élément de butée (310, 721, 722, 723, 724) vient en appui contre la butée (500, 221, 222, 223, 224).

2. Dispositif selon la revendication 1, **caractérisé en ce que** le premier levier de manivelle (301) est connecté à un élément d'entraînement (601) directement ou par le biais d'une première transmission (602, 603).

3. Dispositif selon la revendication 2, **caractérisé en ce que** l'élément d'entraînement est réalisé sous forme de moteur électrique (601).

4. Dispositif selon l'une quelconque des revendications précédentes, **caractérisé en ce que** l'élément de butée (310) est configuré sous forme de partie du premier levier de manivelle (301) ou est connecté rigidement au premier levier de manivelle.

5. Dispositif selon l'une quelconque des revendications 1 à 3, **caractérisé en ce que** l'élément de butée est configuré sous forme de partie de la bielle (302) ou est connecté rigidement à la bielle (302).

6. Dispositif selon l'une quelconque des revendications 1 à 3, **caractérisé en ce que** l'élément de butée (721, 722, 723, 724, 725) est connecté par le biais d'une deuxième transmission.

7. Dispositif selon la revendication 6, **caractérisé en ce que** la deuxième transmission présente une barre de transmission (700) qui est connectée de manière articulée au premier levier de manivelle (301) ou à la bielle (302).

8. Dispositif selon la revendication 7, **caractérisé en ce que** la deuxième transmission présente un deuxième levier de manivelle (711, 712, 713, 714, 715), **en ce que** le deuxième levier de manivelle (711, 712, 713, 714, 715) est supporté au moyen d'un deuxième palier de manière à pouvoir tourner autour d'un deuxième axe de rotation (761) et l'élément de butée (721, 722, 723, 724, 725) est disposé à distance du deuxième axe de rotation (761) au niveau du deuxième levier de manivelle (711, 712, 713, 714, 715) et le deuxième levier de manivelle (711, 712, 713, 714, 715) est connecté de manière articulée à la barre de transmission (700) à distance du deuxième axe de rotation (761).

9. Dispositif selon la revendication 8, **caractérisé en ce que** le deuxième levier de manivelle (711, 713, 715) est supporté au moyen d'un deuxième arbre de manière à pouvoir tourner autour du deuxième axe de rotation (761) au moyen du deuxième palier et le deuxième palier est connecté au support d'appareil (100).

10. Dispositif selon la revendication 8 ou 9, **caractérisé en ce que** le deuxième levier de manivelle (711, 712, 713, 714, 715) présente une deuxième surface d'appui (701) ou est connecté rigidement à une deuxième surface d'appui (903, 904), et **en ce que** le support d'appareil (100) repose, dans la deuxième position, sur la deuxième surface d'appui (701, 903, 904) .

11. Dispositif selon l'une quelconque des revendications 7 à 10, **caractérisé en ce qu'**il présente deux deuxièmes leviers de manivelle (711, 713) et les deux deuxièmes leviers de manivelle (711, 713) sont supportés de manière à pouvoir tourner autour du deuxième axe de rotation (761).

12. Dispositif selon les revendications 9 et 11, **caractérisé en ce que** les deux deuxièmes leviers de manivelle (711, 713) sont disposés au niveau du deuxième arbre (751) et sont connectés rigidement l'un à l'autre par le biais du deuxième arbre (751).

13. Dispositif selon la revendication 11 ou 12, **caractérisé en ce que** les deux deuxièmes leviers de manivelle (711, 712, 713, 714) sont connectés rigidement l'un à l'autre par le biais d'un élément de connexion (901, 902).

14. Dispositif selon les revendications 10 et 13, **caractérisé en ce que** l'élément de connexion (901, 902) est réalisé sous forme de surface d'appui (903, 904) pour le support d'appareil (100) .

15. Dispositif selon l'une quelconque des revendications 8 à 14, **caractérisé en ce qu'**il présente quatre deuxièmes leviers de manivelle (711, 712, 713, 714), à chaque fois deux deuxièmes leviers de manivelle (711, 712, 713, 714) étant connectés rigidement l'un à l'autre et deux des deuxièmes leviers de manivelle (711, 713) pouvant tourner autour du deuxième axe de rotation (761) et les deux deuxièmes leviers de manivelle restants (712, 714) pouvant tourner autour d'un troisième axe de rotation (762), **en ce que** le deuxième axe de rotation (761) et le troisième axe de rotation (762) sont disposés parallèlement l'un à l'autre, **en ce qu'**un deuxième levier de manivelle (711) du deuxième axe de rotation (761) est connecté de manière articulée à un deuxième levier de manivelle (712) du troisième axe de rotation (762) par le biais d'une barre d'accouplement (800), et **en ce que** seulement un levier de manivelle (711) des quatre deuxièmes leviers de manivelle présents (711, 712, 713, 714) est connecté de manière articulée par le biais de la barre de transmission (700) à la bielle (302) ou au premier levier de manivelle (301).

16. Dispositif selon l'une quelconque des revendications 8 à 14, **caractérisé en ce qu'**il présente quatre deuxièmes leviers de manivelle (711, 712, 713, 714), à chaque fois deux deuxièmes leviers de manivelle (711, 712, 713, 714) étant connectés rigidement l'un à l'autre et deux des deuxièmes leviers de manivelle (711, 713) pouvant tourner autour du deuxième axe de rotation (761) et les deux deuxièmes leviers de manivelle restants (712, 714) pouvant tourner autour d'un troisième axe de rotation (762), le deuxième axe de rotation (761) et le troisième axe de rotation (762) étant disposés parallèlement l'un à l'autre, et **en ce qu'**à chaque fois un levier de manivelle (711, 712, 713, 714) du deuxième axe de rotation (761) et du troisième axe de rotation (762) est connecté de manière articulée au premier levier de manivelle (301) ou à la bielle (302) par le biais d'une barre de transmission respective (700).

17. Dispositif selon l'une quelconque des revendications précédentes, **caractérisé en ce que** l'élément de butée (721, 722, 723, 724) est réalisé, en vue de face, sous forme de cercle ou de cercle partiel.

18. Dispositif selon l'une quelconque des revendications précédentes, **caractérisé en ce que** la butée et l'élément de butée (721, 722, 723, 724) sont réalisés de telle sorte que lors de l'application de l'élément de butée (721, 722, 723, 724) contre la butée (221, 222, 223, 224), la butée (221, 222, 223, 224) entoure l'élément de butée (721, 722, 723, 724) au moins en partie par engagement par correspondance de formes.

19. Dispositif selon la revendication 18, **caractérisé en ce que** la butée (221, 222, 223, 224), lors de l'application de l'élément de butée (721, 722, 723, 724) contre la butée (221, 222, 223, 224), entoure l'élément de butée jusqu'à 50 %, en particulier sur plus de 30 %.
